# EUROPEAN PATENT SPECIFICATION

(11) **EP 0 849 050 B1**
(45) Date of publication and mention of the grant of the patent: **31.07.2002**
(21) Application number: 97203953.1
(22) Date of filing: 16.12.1997
(51) Int. Cl.: B25B 27/02

(54) **Puller Device**
Abziehvorrichtung
Dispositif de traction

(30) Priority: 20.12.1996 NL 1004861
(43) Date of publication of application: 24.06.1998
(73) Proprietor: SKF Maintenance Products B.V., 3640 AC Mijdrecht (NL)
(72) Inventor: Rydin, Per Uno Magnus, 1018 EV Amsterdam (NL); van Os, Arjan, 2405 AM Alphen a/d Rijn (NL)
(74) Representative: de Bruijn, Leendert C.

(56) References cited:
- DE-B- 1 294 300
- DE-C- 660 931
- DE-C- 675 758
- FR-A- 1 028 372
- FR-A- 2 083 114
- GB-A- 2 004 802
- SU-A- 1 466 928
- US-A- 5 341 553

## Description

The invention is related to a puller device for disassembling parts, comprising at least two arms provided with claws which are adapted to grip one of said parts and which are each rotatably connected to a hub, through which hub a pushing member extends adapted to rest against another of said parts, as well as a slidable positioning member for moving the arms between a free position and a gripping position.

Such a puller device is disclosed in FR-A-1028372. The arms thereof are pivotably connected to spokes, and are slidably held within the corresponding holes of a plate. By adjusting the mutual position of the plate and the spokes, the arms can be moved between a free position and a gripping position.

This prior art puller device has the disadvantage that it is difficult to handle. The spokes and the plate cannot be gripped in an easy way.

The object of the invention is therefore to provide a puller device which is easier to manipulate. This object is achieved in that both the hub and the positioning member have a ring for grasping by a user, which rings when pulled to one another make the arms move towards their free position, and in that the positioning member is preloaded by a spring for pushing the arms towards their gripping position.

By pulling the rings towards each other, it is ensured that the arms reach their free position in a controlled way, which make the application onto the parts to be disassembled easier. Moreover, both hands can be used for grasping the rings, which makes also a rather heavy puller device easy to handle.

The rings make it possible to grip the puller device in any rotational position, which is a benefit when applying the puller device in a limited, cumbersome place.

The positioning member may be preloaded by a spring for pushing the handle bar means apart. Thus, the arms always return to their closed position when not in use.

The positioning means may comprise a plate having apertures through each of which an arm extends. These apertures are somewhat larger than the transverse dimension of an arm, such that the plate can slide with respect to the arms with little play. Thereby, it is ensured that the arms are all held in the same position, and will always move in unison.

In case the distance between points of rotation of each arm is smaller than the distance between the apertures, it is ensured that the arms will move towards their spread position when pulling the handle bar means towards each other. In case the distance between points of rotation of each arm is larger than the distance between the apertures or pins it is ensured that the arms will move towards their closed position when pulling the handle bar means towards each other. The choice between these two versions depends on whether the connection to the part to be disassembled is from the outside or through a possible hole in the middle of the part. The arms may have an inwardly or outwardly curved or bent shape depending on how one best connects them to the part to be disassembled.

Subsequently, the invention will further be described with reference to the following figures.

Figure 1 shows a top view of the puller device according to the invention.

Figure 2 shows a sideview, partly in cross-section, of the device according to figure 1.

Figure 3 shows the gripping position.

Figure 4 shows a second embodiment.

Figure 5 shows a third embodiment.

The puller device according to the invention has a central hub 1, provided with an internal screwthread with which the screw 2 operates. At its end, the screw is provided with a nut 3 for cooperation with a tool to rotate the screw. Any other force generating device, such as a hydraulic spindle, may be used instead of the screw.

The hub 1 is provided with three ears 4 onto which, by means of shafts 5, an arm 6 is rotatably mounted.

Each arm 6 at its other end has a claw 7 for cooperation with one of the parts to be disassembled.

The screw 2 has a point, for instance a ball shaped member 8, which is to be brought in cooperation with other of the parts to be disassembled. In the known way, by applying the claws 7 and the ball 8 in the appropriate position, and by subsequently screwing the screw 2 into the hub 1, the parts are subjected to forces which eventually lead to separation of those parts.

According to the invention, a positioning member 9 is slidably disposed around the hub 1. By means of spring 10, the positioning member 9 is constantly urged towards stop means 11.

The positioning member also comprises 3 branches 12, each provided with an aperture 13 through which the upper part 14 of each arm 6 extends. The apertures 13 are dimensioned such that the branches 12 may slide around the claws 6 with little play.

The hub has three spokes 15, the ends of which are interconnected by ring 16. Also on the positioning member 9, spokes 17 have been provided, which are interconnected by a ring 18.

The rings 16, 18 can easily be held by both hands. This means that the puller device in question can be manipulated easily. At the same time, these rings 16, 18 can be pulled towards one another, thus moving the arms 6 towards their closed position.

As a result, the puller device can easily be held in the right position, and subsequently, the arms can be hooked behind one of the parts to be gripped.

In that position, the puller device is at its proper place, whereafter the puller device can be held in place with one of the hands while the other hand is used to rotate the screw 2.

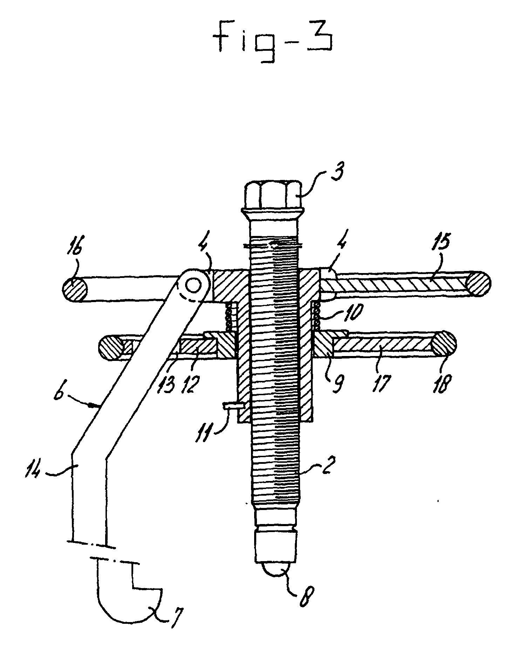

Figure 3 shows the free, spread position of the arms, obtained by grasping the puller device and thereby moving the positioning member 9 upwardly. The spring 10 is thereby compressed, such that upon releasing the positioning member 9, the free position of is obtained.

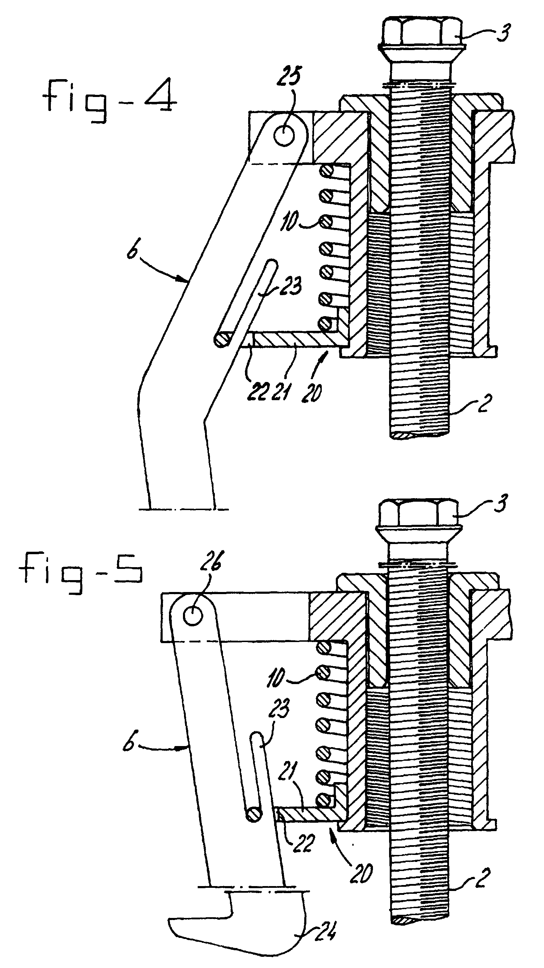

In the embodiments of figures 4 and 5. the arms 6 are steered by means of a finger 23 which projects in hole 22 of plate 21. The remaining parts of the positioning member 20 are identical to the positioning member 9 described in connection with figures 3 and 4.

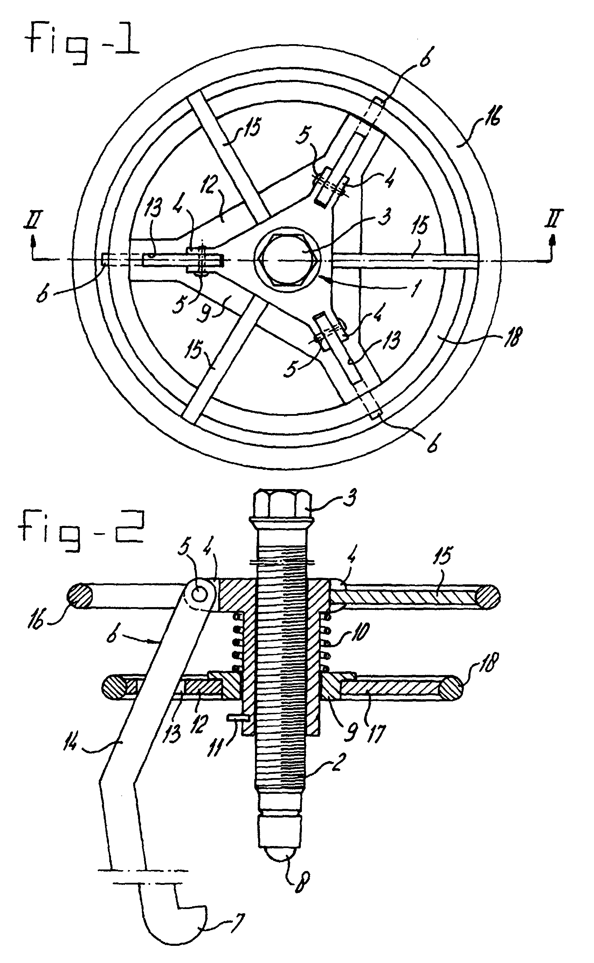

The claws (not shown) of arms 6 of figure 4 are directed towards one another, as in the case of figures 1 and 2. The relative position of hinge point 25 and apertures 22 is such that the arms move away from each other, when moving the positioning member 20 upwardly.

The claws 24 of arms 6 of figure 5 facing away from each other. The relative position of hinge point 26 and apertures 22 is such that the arms 6 move towards each other, when moving the positioning member 20 upwardly.

## Claims

1. Puller device for disassembling parts, comprising at least two arms (6) provided with claws (7) which are adapted to grip one of said parts and which are each rotatably connected to a hub (1), through which hub (1) a pushing member (2) extends adapted to rest against another of said parts, as well as a slidable positioning member (9) for moving the arms (6) between a free position and a gripping position **characterised in that** both the hub (1) and the positioning member (9) have a ring (16, 18) for grasping by a user, which rings (16, 18) when pulled to one another make the arms (6) move towards their free position, and **in that** the positioning member (9) is preloaded by a spring (10) for pushing the arms (6) towards their gripping position.

2. Puller device according to claim 1, wherein both the hub (1) and the positioning member (9) have at least two corresponding spoke members (15, 17), each pair of which being to be grasped by a user.

3. Puller device according to claim 1 or 2, wherein the rings are circular grasping members (16, 18) which are each connected to the ends of the corresponding spokes (15, 17) as corresponding hub ears (4)

4. Puller device according to any of the preceding claims, wherein the positioning member (9) is preloaded by the spring (10) for pushing the handle bar means (15-18) towards their gripping position.

5. Puller device according to any of the preceding claims, wherein the positioning member (9) comprise a plate (19) having apertures (13) through each of which an arm (6) or part (23) of said arm (6) extends.

6. Puller device according to claim 5, wherein the apertures (13) are somewhat larger than the transverse dimension of an arm (6), such that the plate (19) can slide with respect to the arms (6) with little play.

7. Puller device according to claim 6, wherein the distance between points of rotation (5) of each arm (6) is smaller than the distance between the holes (13).

8. Puller device according to claim 7, wherein the arms (6) have an inwardly or outwardly curved or bent shape.

9. Puller device according to any of the preceding claims, wherein the claws (7) point towards each other, and the positioning member (20, 9) and arms (6) are arranged in such a way that by pulling the handle bar means towards one another, the arms (6) move towards a free, spread position.

10. Puller device according to any of claims 1-9, wherein the claws (24) point away from each other, and the positioning member (20) and arms (6) are arranged in such a way that by pulling the handle bar means towards each other, the arms move towards a free, contracted position.

## Patentansprüche

1. Abziehvorrichtung zum Zerlegen von Teilen, mit zumindest zwei Armen (6), die mit Klauen (7) versehen sind, welche dazu bestimmt sind, eines der genannten Teile zu erfassen und die drehbar mit einer Nabe (1) verbunden sind, wobei sich ein Druckteil (2) durch die Nabe (1) erstreckt, das dazu bestimmt ist, gegen ein anderes der genannten Teile anzuliegen, und mit einem verschieblichen Positionierungsteil (9), um die Arme (6) zwischen einer freien Position und einer Greifposition zu bewegen, **dadurch gekennzeichnet, daß** sowohl die Nabe (1) als auch das Positionierungsteil (9) einen Ring (16, 18) zum Erfassen durch einen Benutzer aufweisen, wobei die Ringe (16, 18), wenn sie zueinander gezogen werden, die Arme (6) dazu veranlassen, sich in Richtung auf ihre freie Position zu bewegen, und wobei das Positionierungsteil (9) durch eine Feder (10) vorgespannt ist, um die Arme (6) in Richtung auf ihre Greifposition zu drücken.

2. Abziehvorrichtung nach Anspruch 1, **dadurch gekennzeichnet, daß** sowohl die Nabe (1) als auch das Positionierungsteil (9) zumindest zwei entsprechende Speichenteile (15, 19) aufweisen, wobei jedes Paar von diesen durch einen Benutzer zu erfassen ist.

3. Abziehvorrichtung nach Anspruch 1 oder 2, **dadurch gekennzeichnet, daß** die Ringe kreisförmige Erfassungsteile (16, 18) sind, die mit den Enden der entsprechenden Speichen (15, 17) als entsprechende Nabenansätze (4) verbunden sind.

4. Abziehvorrichtung nach einem der vorangehenden Ansprüche, **dadurch gekennzeichnet, daß** das Positionierungsteil (9) durch die Feder (10) vorbelastet ist, um die Handgriffteile (15-18) in Richtung auf ihre Greifposition zu drücken.

5. Abziehvorrichtung nach einem der vorangehenden Ansprüche, **dadurch gekennzeichnet, daß** das Positionierungsteil (9) eine Platte (19) umfaßt, die Öffnungen (13) aufweist, wobei sich durch jede von diesen ein Arm (6) oder ein Abschnitt (23) eines solchen Arms (6) erstreckt.

6. Abziehvorrichtung nach Anspruch 5, **dadurch gekennzeichnet, daß** die Öffnungen (13) etwas größer als die Querabmessung eines Arms (6) sind, so daß sich die Platte (19) in bezug auf die Arme (6) mit einem geringen Spiel verschieben kann.

7. Abziehvorrichtung nach Anspruch 6, **dadurch gekennzeichnet, daß** der Abstand zwischen Drehpunkten (5) eines jeden Arms (6) kleiner ist als der Abstand zwischen den Löchern (13).

8. Abziehvorrichtung nach Anspruch 7, **dadurch gekennzeichnet, daß** die Arme (6) eine nach innen oder nach außen gekrümmte oder gebogene Form aufweisen.

9. Abziehvorrichtung nach einem der vorangehenden Ansprüche, **dadurch gekennzeichnet, daß** die Klauen (7) zueinander weisen, wobei die Positionierungsteile (20, 9) und die Arme (6) auf eine solche Weise angeordnet sind, daß sich die Arme (6) dadurch, daß die Handgriffteile zueinander gezogen werden, in eine freie, gespreizte Position bewegen.

10. Abziehvorrichtung nach einem der Ansprüche 1 bis 9, **dadurch gekennzeichnet, daß** die Klauen (24) voneinander weggerichtet sind, wobei das Positionierungsteil (20) und die Arme (6) auf eine solche Weise angeordnet sind, daß sich die Arme dadurch, daß die Handgriffteile zueinander gezogen werden, in eine freie, zusammengezogene Position bewegen.

## Revendications

1. Dispositif de traction poùr démonter des pièces, comprenant au moins deux bras (6) munis de griffes (7) qui sont adaptés pour saisir l'une desdites pièces et qui sont chacun raccordés de façon à pouvoir tourner à un moyeu (1), moyeu (1) à travers lequel s'étend un élément de poussée (2) adapté pour reposer contre une autre desdites pièces, ainsi qu'un élément de positionnement coulissant (9) pour déplacer les bras (6) entre une position libre et une position d'agrippement, **caractérisé en ce que** le moyeu (1) et l'élément de positionnement (9) comportent tous deux un anneau (16, 18) destiné à être saisi par un utilisateur, ces anneaux (16, 18) lorsqu'ils sont tirés l'un vers l'autre, faisant se déplacer les bras (6) vers leur position libre, et **en ce que** l'élément de positionnement (9) est préchargé par un ressort (10) pour pousser les bras (6) vers leur position d'agrippement.

2. Dispositif de traction selon la revendication 1, dans lequel le moyeu (1) et l'élément de positionnement (9) comportent tous deux au moins deux éléments de rayons correspondants (15, 17), dont chaque paire est destinée à être saisie par un utilisateur.

3. Dispositif de traction selon la revendication 1 ou 2, dans lequel les anneaux sont des éléments d'agrippement circulaires (16, 18) qui sont chacun raccordés aux extrémités des rayons correspondants (15, 17) de même que des oreilles de moyeu correspondantes (4).

4. Dispositif de traction selon l'une quelconque des revendications précédentes, dans lequel l'élément de positionnement (9) est préchargé par le ressort (10) pour pousser les moyens formant barre de manipulation (15 à 18) vers leur position d'agrippement.

5. Dispositif de traction selon l'une quelconque des revendications précédentes, dans lequel l'élément de positionnement (9) comprend une plaque (19) comportant des ouvertures (13) à travers chacune desquelles un bras (6) ou une partie (23) dudit bras (6) s'étend.

6. Dispositif de traction selon la revendication 5, dans lequel les ouvertures (13) sont légèrement plus grandes que la dimension transversale d'un bras (6), telle sorte que la plaque (19) puisse coulisser par rapport aux bras avec un faible jeu.

7. Dispositif de traction selon la revendication 6, dans lequel la distance entre des points de rotation (5) de chaque bras (6) est inférieure à la distance entre les trous (13).

8. Dispositif de traction selon la revendication 7, dans lequel les bras (6) ont une forme incurvée ou courbée vers l'intérieur ou vers l'extérieur.

9. Dispositif de traction selon l'une quelconque des revendications précédentes, dans lequel les griffes (7) sont pointées les unes vers les autres, et l'élément de positionnement (20, 9) et les bras (6) sont agencés de telle façon qu'en tirant les moyens formant barre de manipulation les uns vers les autres, les bras (6) se déplacent vers une position libre étalée.

10. Dispositif de traction selon l'une quelconque des revendications 1 à 9, dans lequel les griffes (24) pointent de façon à s'éloigner les unes des autres, et l'élément de positionnement (20) et les bras (6) sont agencés de telle sorte qu'en tirant les moyens formant barre de manipulation les uns vers les autres, les bras se déplacent vers une position libre contractée.
